# EUROPEAN PATENT SPECIFICATION

(11) **EP 0 782 663 B1**
(45) Date of publication and mention of the grant of the patent: **02.11.2000**
(21) Application number: 95929951.2
(22) Date of filing: 25.08.1995
(51) Int. Cl.: F02B 37/12, F02B 37/00, F02B 39/10, F02B 37/10

(54) **TURBOCHARGED INTERNAL COMBUSTION ENGINE ARRANGEMENT**
AUFGELADENE BRENNKRAFTMASCHINEANORDNUNG
CONFIGURATION DE MOTEUR A COMBUSTION INTERNE TURBOCOMPRESSE

(30) Priority: 25.08.1994 GB 9417338; 28.09.1994 GB 9419671
(43) Date of publication of application: 09.07.1997
(73) Proprietor: Randle, James Neville, Bubbenhall, Nr. Coventry CV8 3BH (GB)
(72) Inventor: Randle, James Neville, Bubbenhall, Nr. Coventry CV8 3BH (GB)
(74) Representative: Wise, Stephen James
(86) International application number: GB9502011
(87) International publication number: WO9606271

(56) References cited:
- EP-A- 0 233 079
- EP-A- 0 420 666
- FR-A- 2 362 275
- PATENT ABSTRACTS OF JAPAN vol. 18 no. 607 (M-1707) ,18 November 1994 & JP,A,06 229251 (ISUZU MOTORS) 16 August 1994,
- PATENT ABSTRACTS OF JAPAN vol. 13 no. 183 (M-820) ,28 April 1989 & JP,A,01 012026 (ISUZU MOTORS) 17 January 1989,

## Description

The invention relates to a turbocharged internal combustion engine arrangement, and preferably to a turbocharged diesel engine.

It is known that to compress the air going into an internal combustion engine will allow a greater fuel charge to be burnt which produces increased power. In the case of pressure charging by way of a turbocharger, the compressor is driven by a turbine which is driven by the exhaust gasses leaving the cylinders. Such systems have two operational problems:
- The rotational inertia of the turbine/compressor reduces the rate at which the engine can accelerate, this is known as turbo lag.
- When the engine is designed to give a very high performance through a high level of pressure charging, it will usually have a lower compression ratio to limit pressures and temperatures in the cylinder head. This introduces difficulties in starting, particularly in cold conditions.

In GB-A-1396082 published in 1975, there is proposed an internal combustion engine having an exhaust turbo charger, the engine including a further drive comprising a regulable electric motor which, in use maintains the rotary speed of the motor at a constant relationship with the engine over the entire operating speed of the engine.

EP 0 233 079 A (Isuzu Motors) shows an internal combustion arrangement, the engine having an inlet and exhaust, the arrangement having a turbocharger comprising a first turbine and a compressor arranged to be connected to the engine exhaust, the arrangement having a second turbine and the arrangement further having a rotary dynamoelectric machine, the inlet of the second turbine being connectable in the arrangement so as to be driven by exhaust gases from the engine exhaust. A problem with the above arrangement is that it is likely to become unbalanced.

It is one object of the invention to provide a turbocharged internal combustion engine adapted to provide extra power when required.

Accordingly the invention is characterised by an auxiliary combustion chamber which is connectable within the arrangement so as to generate gases to drive the first or second turbine, whether or not the engine is running, wherein the machine is arranged to be coupled to the turbocharger or second turbine, and wherein the second turbine is arranged so as to be capable of being disconnected from the supply of exhaust gases from the engine.

Preferably the dynamoelectric machine is operable as a generator and the first turbine or second turbine is connected thereto via a clutch device. In this manner the arrangement can be freed of the inertia of the dynamoelectric machine and can operate as a conventional turbocharger.

When used as a generator operating whilst connected to the engine via the clutching device, energy can be withdrawn from the generator. In this form of the arrangement the level of energy withdrawn will be limited by the aerodynamic matching of the compressor and the turbine and typically will extract about 10% of the combustion power.

In a preferred embodiment supplementary means are provided to drive the generator. Preferably the supplementary means is a turbine arranged to operate in free turbine mode. The free turbine acts as a further expansion stage which can extract as much energy as its expansion ratio will allow from the extra energy left in the exhaust system after the turbocharger expansion stage. While the supplementary means may be connected to the electrical motor/generator in any way, it is advantageous to connect the free turbine to the dynamoelectric machine via a clutch device.

It is a much preferred feature of the invention that the electric motor/generator is a high speed, low inertia device capable of being directly driven by the turbine. Such a device would incorporate advanced permanent magnets and solid state switching.

In a further preferred embodiment, the generator and its associated turbocharger and including the auxiliary combustion chamber are operable as an auxiliary power unit independent of the main internal combustion engine. The auxiliary power unit can also be combined with a heat exchanger to extract heat from both its own and the main engine's exhaust system to improve efficiency.

It is also a feature of a preferred embodiment that compressed air bled from the compressor side can, after cooling through an ambient air heat exchanger, be expanded to ambient pressure to provide passenger compartment cooling or heating. In this configuration the power of the main internal combustion engine can be increased significantly by providing extra energy to the turbocharger directly from the device's combustion chamber. In such a configuration the incoming air must be divided between the auxiliary combustion chamber and the main internal combustion engine.

In a further preferred embodiment the auxiliary power unit is separated from the main internal combustion engine and does not share any aerodynamic devices with it.

In a further embodiment it is a more specific objective to increase the pressure of the ingoing charge to a turbocharged engine, preferably a turbocharged diesel engine.

In this embodiment a supplementary turbocharger is included in the circuit of the first mentioned turbocharger and auxiliary combustion chamber arrangement. Preferably, the internal combustion engine has a main turbocharger circuit comprising a turbine and compressor; a combustion chamber; and a supplementary turbocharger circuit, the output of the supplementary circuit being arranged to supply pressurised air to the input side of the main turbocharger.

The extra power that can be developed in the above embodiment is limited only by the physical limitations imposed by the main internal combustion engine. Furthermore the design is much less constrained than is the case with an integrated design. In the case of a multi stage turbocharged engine it is found that by varying the amount of exhaust gases into the chambers between the internal combustion engine and the first turbocharger and the chamber between the turbochargers that great flexibility is found in determining the operating temperature and pressure regimes of the internal combustion engine.

Preferred embodiments can be used to pre-charge the inlet manifold of the internal combustion engine prior to start up, so overcoming the cold start difficulties experienced with low compression, high performance engines.

By providing valving to close the normal air entry passages of the inlet manifold of the internal combustion engine, it is also possible to introduce the exhaust gases from the auxiliary combustion chamber directly into the inlet manifold, since the air fuel ratio is such as to leave an excess of oxygen sufficient to start a diesel engine. Air can also be bled from the compressor stage for the same purpose. Under some circumstances the internal combustion engine can be started without the use of electric starting.

The preferred embodiments fall into two groups; namely those with the turbocharger circuit aerodynamic components are shared with the main engine; and free standing, in which the turbine of the turbocharger can operate independently.

In order that the invention may be well understood it will now be described by way of example with reference to the accompanying diagrammatic drawings wherein:
Figure 1 shows the basic circuit of an integrated turbocharger arrangement not in accordance with the invention;
Figure 2 shows another integrated turbocharger arrangement in accordance with the invention;
Figures 3A to 3E show the circuit of Figure 2 under different operating conditions;
Figure 4 shows a further embodiment in which turbine of the turbocharger can operate independently;
Figure 4a shows a variant of the Figure 4 embodiment;
Figure 4b shows a further variant of the Figure 4 embodiment;
Figure 4c shows a further variant of the Figure 4 embodiment;
Figure 4d shows a further variant of the Figure 4 embodiment;
Figure 4e shows a further variant of the Figure 4 embodiment; and
Figure 4f shows a further variant of the Figure 4 embodiment.

The same reference numerals are used to identify the same parts in the different embodiments.

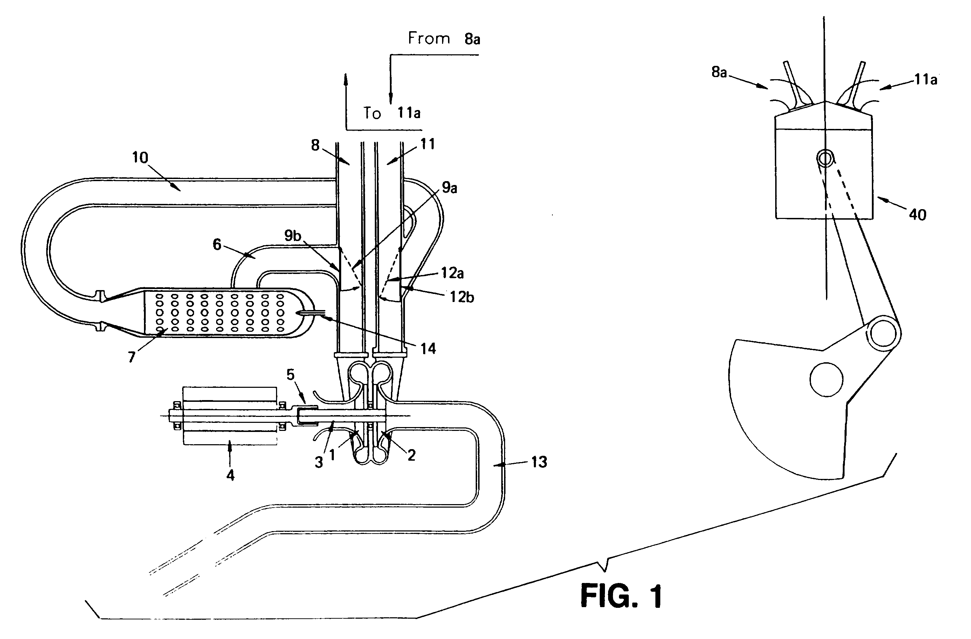

The circuit shown in Figure 1 comprises a turbocharger which consists of compressor 1 connected to a turbine 2 by a connecting shaft 3. A high speed, low inertia electric motor/generator 4 is connected by a clutch 5 to the shaft 3. The clutch enables the motor to be connected or disconnected from the compressor 1.

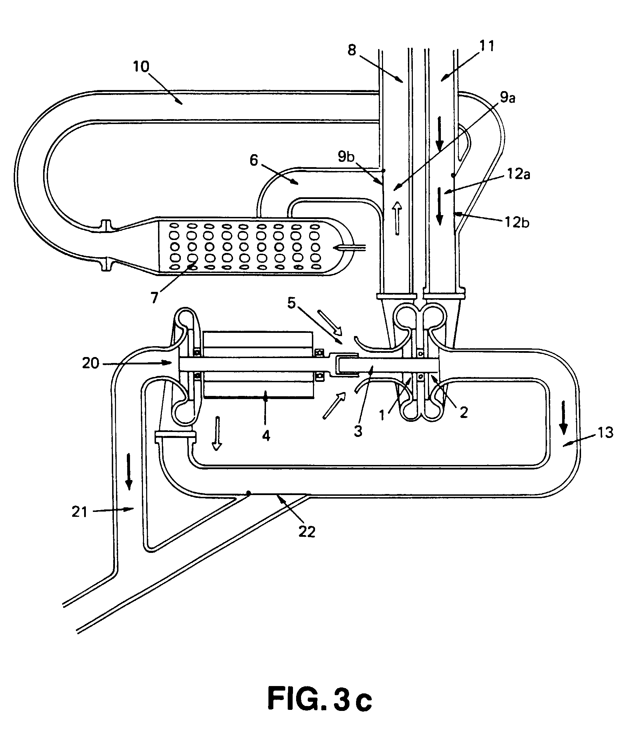

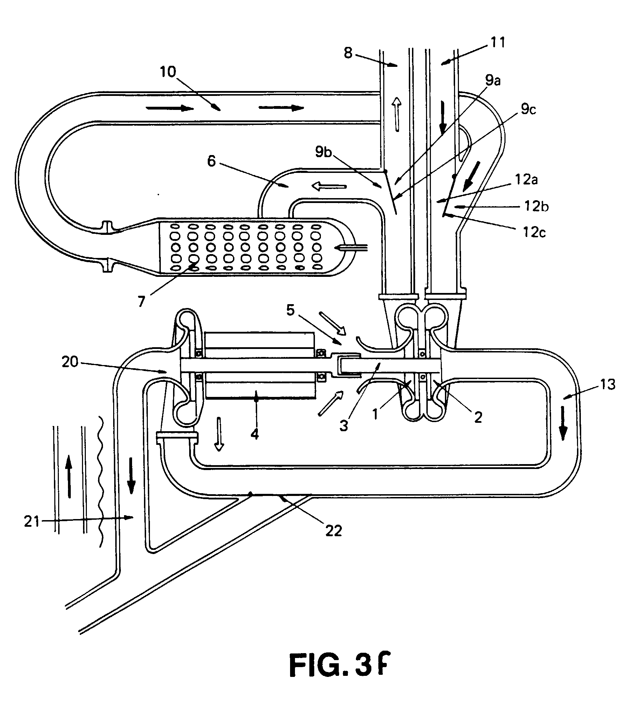

A conduit 6 supplies pressurised air to a combustion chamber 7. An engine air intake circuit 8 branches off the conduit 6 and supplies pressurised air to the cylinders of a reciprocating internal combustion engine 40 via ports 8a (only one of which is shown) under control of a first director valve 9, which can be moved between positions 9a, 9b and an intermediate position 9c (see Figure 3F) at the inlet of the conduit 6.

A conduit 10 connects the outlet of the combustion chamber 7 and the engine exhaust conduit 11 supplying exhaust gases to the turbine 2 from port 11a of engine 40. A second set of director valve arrangement 12, moveable between positions 12a, 12b and an intermediate position 12c (see Figure 3F) is present where the conduit 10 meets the conduit 11 (in a simplified device these valves may be omitted). The expanded exhaust gases exit to atmosphere via exhaust conduit 13. A nozzle 14 extends from the fuel tank (not shown) through the wall of the combustion chamber 7 to inject fuel into the chamber 7 to provide extra exhaust gas energy when required.

In operation, air can be supplied to the compressor 1 and exhaust gas to the turbine 2 in the usual way. When the turbine 2 is in operation and the clutch 5 connects the motor 4 to the shaft 3, electricity will be generated and rectified by a rectifier (not shown) and may he stored in a battery. In this way the circuit can be used to generate and store electrical power. When the engine is running, the motor 4 may be used to supply auxiliary power, and this is especially useful when the engine is running at low power when there is insufficient energy in the exhaust gases to drive the turbine fast enough to pressurise the incoming air.

Motor/generator 4 is an A.C. machine and is provided with a conventional solid state switching arrangement which has a control input for controlling the commutation and hence whether electrical power is absorbed or generated.

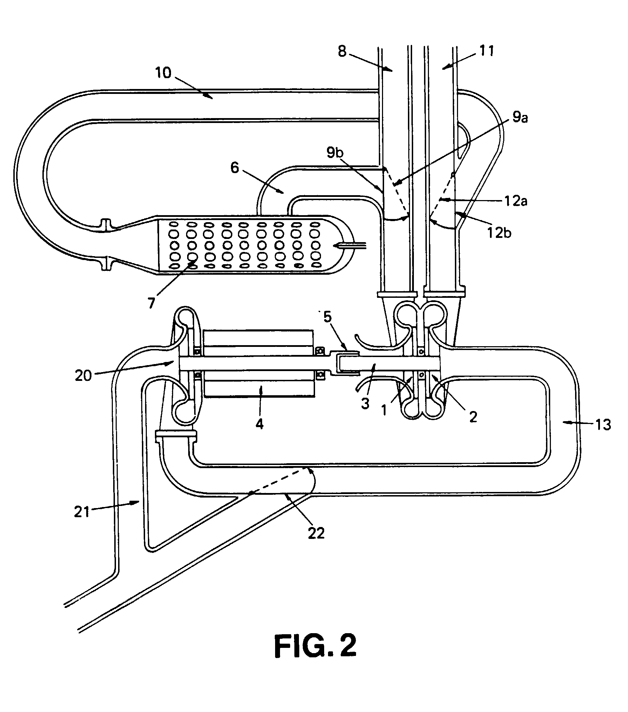

In the embodiment of the invention of Figure 2, the circuit includes a further turbine 20 on the distal side of the electric motor/generator 4 which is connected via a one way clutch 5 to the compressor 1. The conduit 21 for the further turbine 20 is connected to the output side of the main turbine. The clutches are disengaged. A director valve 22 is provided at the junction of conduits 21 and 22a and is moveable between thee shown position and the broken line position of the valve 22.

For the sake of simplicity, the internal combustion engine 40 has been omitted from Figure 2 and the remaining figures, but will be present in this and the subsequently described embodiments.

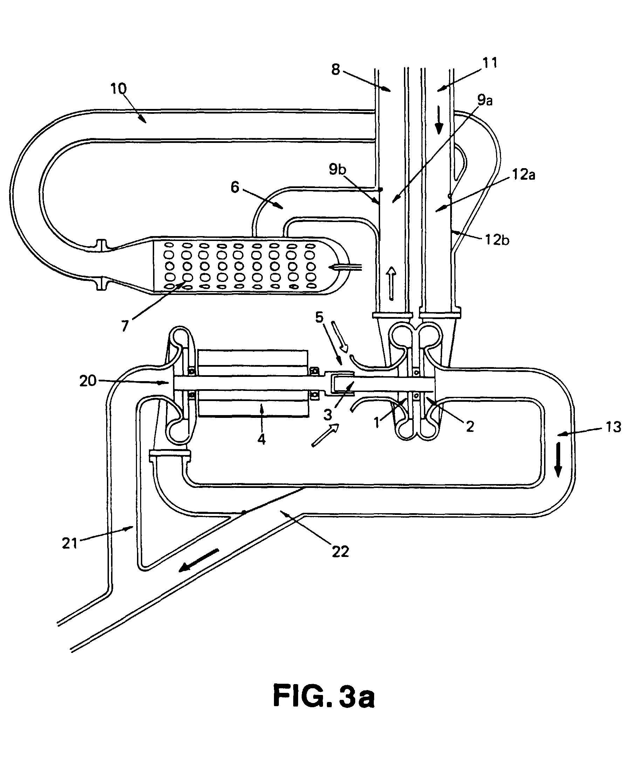

Figure 3A shows the mode of operation of the Figure 2 circuit for normal turbo-charging operation in which the clutches are disengaged, air is supplied to the compressor and exhaust gases to the turbine.

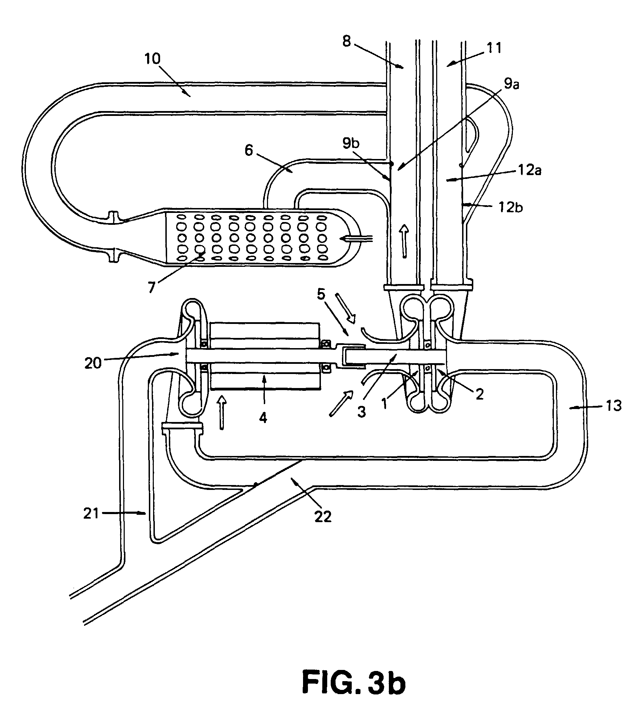

In Figure 3B, at start up, air is supplied by the compressor which is driven by the motor which is supplied with electricity (in some cases this will start the internal combustion engine without recourse to a starter motor).

In Figure 3C, for boosted low speed electrical generation, the clutch 5 is disengaged, air is supplied to the compressor and extra energy is supplied to the turbines by diverting extra energy into the exhaust by late valve timing of fuel and diverted air injection.

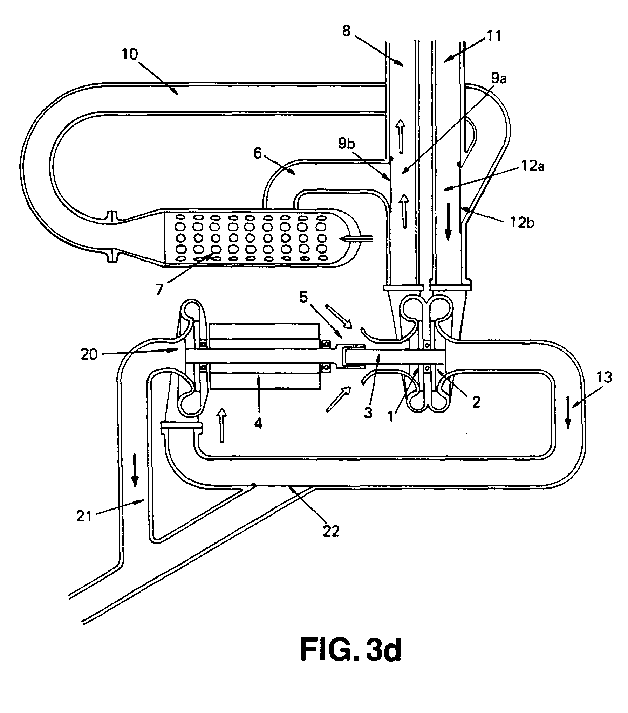

In Figure 3D, for extra main engine boost, usually during transient conditions, electrical energy is supplied to motor 4 to speed up the turbocharger. The clutch 5 is engaged.

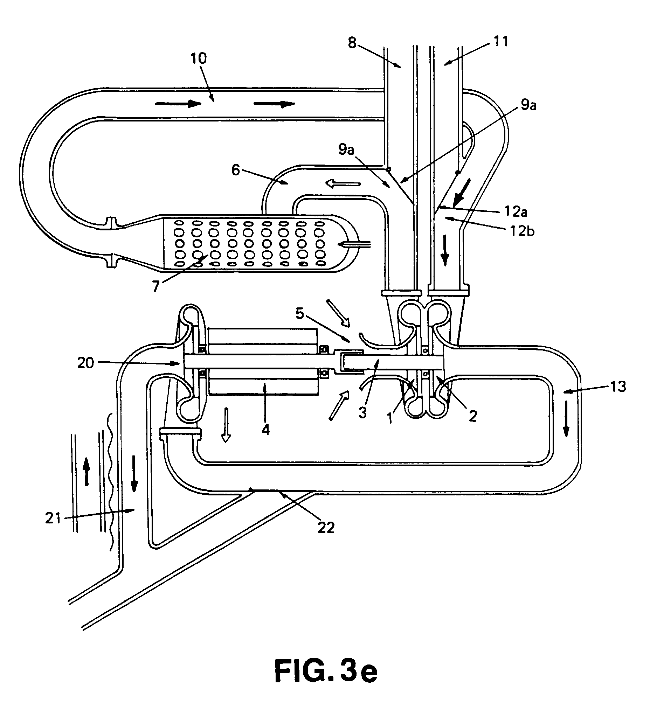

In Figure 3E, for use as a gas turbine auxiliary power unit, the clutch 5 is disengaged; incoming air is diverted to the combustion chamber 7 and the exhaust gases power both turbines.

In Figure 3F, for use as a compound engine for steady state main engine boost, valve 9 is in position c sharing the incoming air between the auxiliary combustion chamber 7 and the main internal combustion engine 40 (not shown). Valve 12 is in position c allowing the gases from both the main internal combustion engine 40 and the auxiliary combustion chamber 7 to impinge upon turbine 2.

In all cases the exhaust diverter valves 12a, 12b and 22 may be omitted for simplicity with some performance loss.

By virtue of the structure and modes of operation an engine of an embodiment of the invention can play the following roles:
1. As a gas turbine auxiliary power unit and combined heat and power unit when the main engine is not in operation.
2. As a precharger to assist or achieve start up of the main engine.
3. As a transient booster by electrically speeding up the compressor.
4. As a generator with extra capacity capability at low main engine speeds.
5. As a device for eliminating turbo lag by accelerating the compressor electrically.
6. As a conventional turbo charger.
7. As a compound engine to boost the steady state power of the main reciprocating engine.

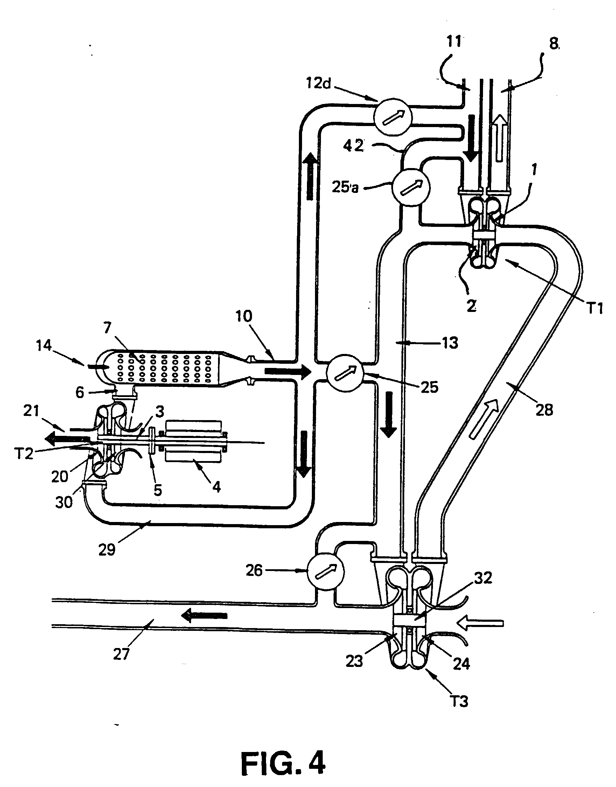

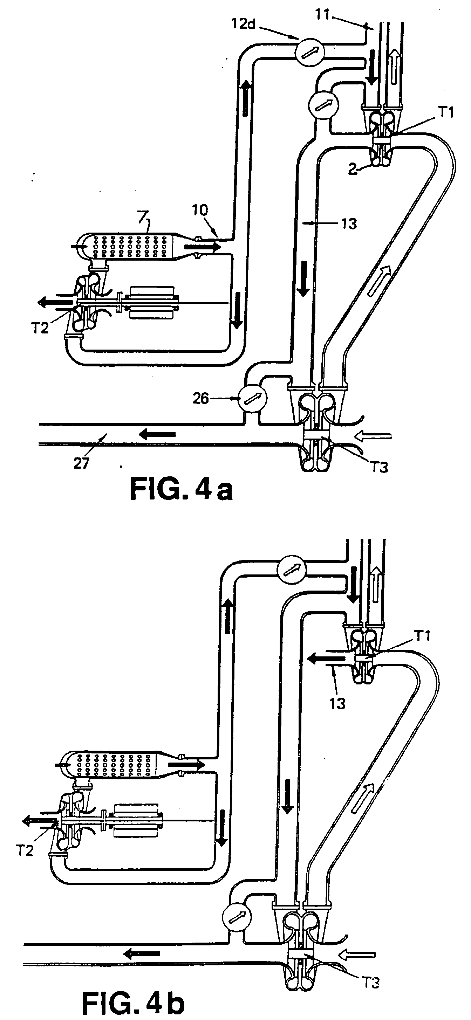

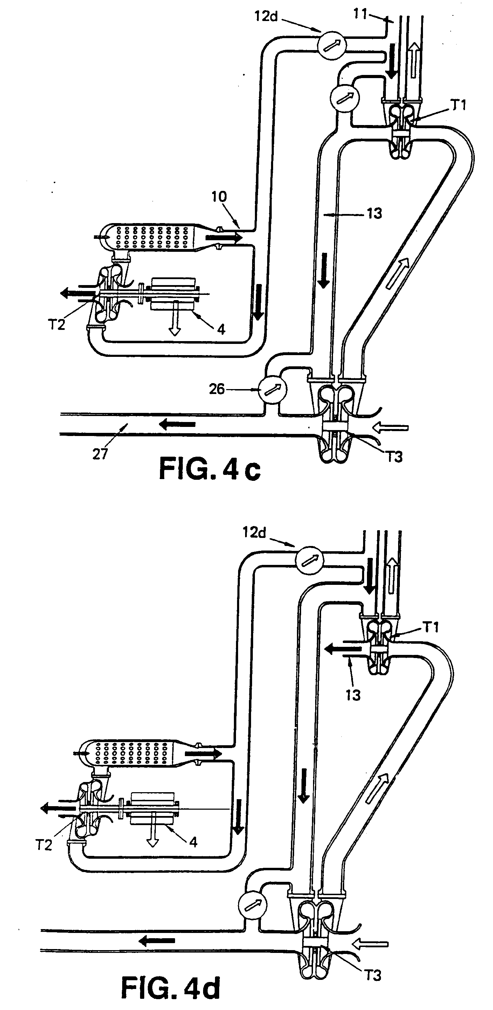

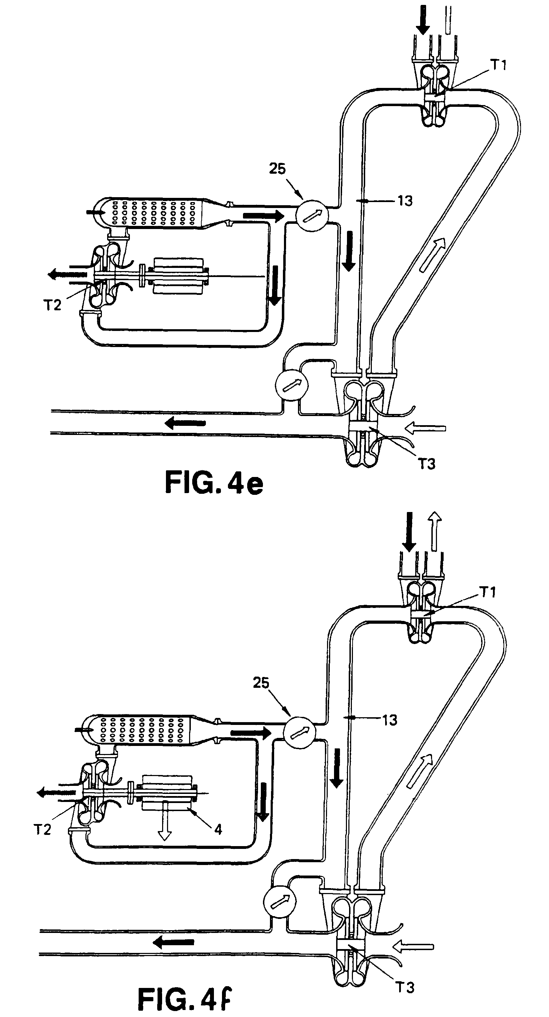

The embodiment of Figure 4 is for the principal purpose of increasing the power output of the main internal combustion engine and would be run for considerable periods as a compound engine.

The circuit shown in Figure 4 comprises turbocharger T1 comprising a compressor 1 connected to a turbine 2. A conduit 8 supplies pressurised air from the turbocharger T1 to the cylinders of an internal combustion engine (not shown). Exhaust gas from the engine is passed via a conduit 11 to the turbine 2 of the turbocharger T1. The conduit 11 has a branch conduit 42 incorporating a valve 25a which is a waste gate diverting excess exhaust gases into conduit 13.

According to an embodiment of the invention, a supplementary turbine set T2 is present. The turbine set comprises a compressor 30 and turbine 20, connected by a shaft 3 to a motor or alternator 4 via clutch device 5. The alternator/motor 4 can be electronically controlled to extract or supply electrical power at the command of an electronic control unit integrated with the main engine control. In this preferred embodiment a supplementary turbocharger T3 is also present. The output from the compressor 20 of supplementary turbine set T2 leads to a combustion chamber 7 including a fuel injection nozzle 14. The output of the combustion chamber leads via a conduit 10 into the exhaust inlet conduit 11 via a regulable control valve 12d and exhaust inlet conduit 13 via a regulable control valve 25. The outlet side of the turbocharger T3 is connected via conduit 28 to the inlet of turbocharger T1, thereby raising the pressure in the main engine inlet manifold conduit 8 to a significantly higher pressure than could be achieved using Turbocharger T1 alone. Extra fuel can then be burnt in the main engine thereby greatly increasing the power developed at the crankshaft. Waste gate control valve 26 is used to control the pressure in inlet conduits 8 and 28. In applications where the engine runs in near steady state conditions waste gates 25a and 26 may not be required.

It is known that by particular control of the flow of the exhaust gases from auxiliary combustion chamber 7 into conduits 11 and 13 that the pressure and temperature regimes in the internal combustion engine 40 can be closely controlled to achieve the maximum power output that the main engine can deliver within the physical constraints imposed by its construction materials.

Alternator/motor 4 can be used to reduce turbo lag by speeding up turbine set T2 by drawing electricity from the batteries.

By closure of regulable valves 12d and 25 Turbine set T2 and combustion chamber 7 can drive alternator 4 as an independent Auxiliary power unit.

The system can be operated with a single stage turbocharger system when turbocharger T1 only would be present and the exhaust gases from combustion chamber 7 would be directed into conduit 11 via regulable valve 12d. Regulable valve 25 would be omitted.

The maximum power available for the purpose of boosting the performance of the main engine, is equal to that which would normally be absorbed by generator 4, which would be generating little or even no power when the main engine required maximum boost. Any intermediate stage can provide a combination of boost power and electrical generation down to the point when both regulable valves 12d and 25 are closed and the system operates as a stand alone auxiliary power unit.

In the embodiment of Figure 4a the system is simplified to allow the exhaust gases from combustion chamber 7 to enter only ahead of the primary turbocharger turbine 2. Such a system would also apply to a single stage device. In Figure 4c regulable valve 12d is closed and the system is operating as a stand alone auxiliary power unit.

In the embodiment 4b both turbocharger turbines 2 and 23 are subjected to the same inlet pressure and both turbochargers exhaust to atmosphere. This system lowers the back-pressure in the system and improves efficiency and power output but does not have the flexibility of the system described in Figure 4 In Figure 4d regulable valve 12d is closed and the system is operating as a stand alone auxiliary power unit.

In the embodiment 4e the system is further simplified by introducing the exhaust gases from combustion chamber 7 into conduit 13 via regulable valve 25. This system is relatively easily designed into an existing system but lacks the flexibility of the system described in Figure 4, Figure 4f shows system 4e operating as a stand alone auxiliary power unit.

All embodiments 4, 4a, 4b, 4e will pressurise the main engine manifold prior to start up by being started before the main engine. The main engine can thus run with much lower compression ratios than would otherwise be possible and hence at much higher power outputs. The use of electrical power applied through motor/generator 7 when running as a motor can be used to offset the effects of turbo-lag as in the embodiments of Figures 1 to 3.

## Claims

1. An internal combustion engine arrangement, the engine (40) having an inlet (8) and exhaust (11), the arrangement having a turbocharger comprising a first turbine (2) and a compressor (1) arranged to be driven by the turbine, the turbine having an inlet arranged to be connected to the engine exhaust, the arrangement having a second turbine (20), and the arrangement further having a rotary dynamoelectric machine (4), the inlet of the second turbine being connectable in the arrangement so as to be driven by exhaust gases from the engine exhaust, characterised by an auxiliary combustion chamber (7) which is connectable within the arrangement so as to generate gases to drive the first or second turbine, whether or not the engine (40) is running wherein the machine (4) is arranged to be coupled to the turbocharger or second turbine, and wherein the second turbine is arranged so as to be capable of being disconnected from the supply of exhaust gases from the engine.

2. An internal combustion engine arrangement according to Claim 1, wherein the dynamoelectric machine (4) is operable as a generator and the first turbine (2) or second turbine (2) is connected thereto via a clutch (5).

3. An internal combustion arrangement according to Claim 1 or Claim 2, wherein the second turbine (20) is arranged to operate in free turbine mode.

4. An internal combustion engine arrangement according to Claim 3, wherein an outlet conduit (21) of the second turbine (20) is thermally coupled to a heat exchanger which is arranged to extract heat from its exhaust gases.

5. An internal combustion engine arrangement according to any preceding Claim, wherein the dynamoelectric machine (4) is a high speed, low inertia machine arranged to be driven by the turbocharger (T1) at the same rotational speed as the turbocharger.

6. An internal combustion engine arrangement according to any preceding Claim, wherein said dynamoelectric machine (4) is an A.C. machine and is provided with gate-controlled semiconductor switching means for controlling its generator.

7. An internal combustion engine arrangement according to any preceding Claim, wherein a supplementary turbine set (T3) is included in the circuit of the turbocharger and/or the auxiliary combustion chamber (7).

8. An internal combustion engine arrangement according to Claim 7, wherein an output (28) of the circuit of the supplementary turbine set (T3) is arranged to supply pressurised air to the input side of the turbocharger (T1).

9. An internal combustion engine arrangement according to any preceding Claim, wherein said further turbine (2) is incorporated in a further turbine set (T2) including a further compressor (30), the circuit of the further turbine set having an output which is connected to an input of a supplementary turbine set (T3) and/or is connected to the exhaust of the internal combustion engine.

10. An internal combustion engine arrangement according to Claim 9, wherein valve means (12d, 25) are provided for controlling the relative gas flows from the output of the circuit of said further turbine set (T2) to the inputs of the turbocharger (T1) and supplementary turbine set (T3).

11. An internal combustion engine arrangement according to Claim 9 or Claim 10, wherein the further turbine set (T2) is present, an output of the circuit of the further turbine set and an exhaust of said turbocharger (T1) being connected to an input (13) of the supplementary turbine set (T3).

12. An internal combustion engine arrangement according to Claim 11, wherein a valve (25) is connected between the output of the circuit of the further turbine set (T2) and the input of the supplementary turbine set (T3).

## Patentansprüche

1. Verbrennungskraftmaschinenanordnung, wobei die Maschine (40) einen Einlaß (8) und einen Auslaß (11) aufweist, wobei die Anordnung einen Turbolader hat, der eine erste Turbine (2) und einen Kompressor (1) aufweist, welcher angeordnet ist, um durch die Turbine angetrieben zu werden, wobei die Turbine einen Einlaß hat, der angeordnet ist, um mit dem Maschinenauslaß verbunden zu werden, wobei die Anordnung eine zweite Turbine (20) aufweist und wobei die Anordnung ferner eine drehbare dynamoelektrische Vorrichtung (4) hat, wobei der Einlaß der zweiten Turbine in der Anordnung verbindbar ist, um durch die Auslaßgase von dem Maschinenauslaß angetrieben zu werden, gekennzeichnet durch eine Hilfsverbrennungskammer (7), die in der Anordnung verbindbar ist, um Gase zu erzeugen, um die erste oder die zweite Turbine anzutreiben, wobei, ob die Maschine (40) läuft oder nicht, die Vorrichtung (4) angeordnet ist, um an den Turbolader oder die zweite Turbine gekuppelt zu werden, und wobei die zweite Turbine angeordnet ist, um fähig zu sein, von der Zufuhr der Auslaßgase von der Maschine getrennt zu werden.

2. Verbrennungskraftmaschinenanordnung nach Anspruch 1, wobei die dynamoelektrische Vorrichtung (4) als ein Generator betreibbar ist und die erste Turbine (2) oder die zweite Turbine (20) damit über eine Kupplung (5) verbunden ist.

3. Verbrennungskraftmaschinenanordnung nach Anspruch 1 oder Anspruch 2, wobei die zweite Turbine (20) angeordnet ist, um in einem Freifahrturbinenmodus zu arbeiten.

4. Verbrennungskraftmaschinenanordnung nach Anspruch 3, wobei eine Auslaßleitung (21) der zweiten Turbine (20) an einen Wärmetauscher thermisch gekuppelt ist, der angeordnet ist, um aus deren Auslaßgasen Wärme zu entziehen.

5. Verbrennungskraftmaschinenanordnung nach einem der vorhergehenden Ansprüche, wobei die dynamoelektrische Vorrichtung (4) eine trägheitsarme Hochgeschwindigkeitsvorrichtung ist, die angeordnet ist, um von dem Turbolader (T1) mit der gleichen Drehgeschwindigkeit wie der Turbolader angetrieben zu werden.

6. Verbrennungskraftmaschinenanordnung nach einem der vorhergehenden Ansprüche, wobei die dynamoelektrische Vorrichtung (4) eine Wechselstromvorrichtung ist und mit einer torgesteuerten Halbleiterschalteinrichtung zum Steuern ihres Generators versehen ist.

7. Verbrennungskraftmaschinenanordnung nach einem der vorhergehenden Ansprüche, wobei ein Zusatzturbinenaggregat (T3) in der Schaltung des Turboladers und/oder der Hilfsverbrennungskammer (7) eingeschlossen ist.

8. Verbrennungskraftmaschinenanordnung nach Anspruch 7, wobei ein Auslaß (28) der Schaltung des Zusatzturbinenaggregats (T3) angeordnet ist, um der Einlaßseite des Turboladers (T1) Druckluft zuzuführen.

9. Verbrennungskraftmaschinenanordnung nach einem der vorhergehenden Ansprüche, wobei die weitere Turbine (2) in ein weiteres Turbinenaggregat (T2) eingegliedert ist, welches einen weiteren Kompressor (30) einschließt, wobei die Schaltung des weiteren Turbinenaggregats einen Auslaß hat, der an einen Einlaß eines Zusatzturbinenaggregats (T3) angeschlossen ist und/oder an den Auslaß der Verbrennungskraftmaschine angeschlossen ist.

10. Verbrennungskraftmaschinenanordnung nach Anspruch 9, wobei zum Steuern der relativen Gasströme von dem Auslaß der Schaltung des weiteren Turbinenaggregats (T2) zu den Einlässen des Turboladers (T1) und des Zusatzturbinenaggregats (T3) Ventilmittel (12d, 25) vorgesehen sind.

11. Verbrennungskraftmaschinenanordnung nach Anspruch 9 oder Anspruch 10, wobei das weitere Turbinenaggregat (T2) vorgesehen ist, wobei ein Auslaß der Schaltung des weiteren Turbinenaggregats und ein Auslaß des Turboladers (T1) an einen Einlaß (13) des Zusatzturbinenaggregats (T3) angeschlossen sind.

12. Verbrennungskraftmaschinenanordnung nach Anspruch 11, wobei ein Ventil (25) zwischen dem Auslaß der Schaltung des weiteren Turbinenaggregats (T2) und dem Einlaß des Zusatzturbinenaggregats (T3) angeschlossen ist.

## Revendications

1. Agencement de moteur à combustion interne, le moteur (40) comprenant une entrée (8) et un échappement (11), l'agencement comportant un turbocompresseur comprenant une première turbine (2) et un compresseur (1) agencé pour être entraîné par la turbine, la turbine comportant une entrée agencée pour être raccordée à l'échappement du moteur, l'agencement comportant une deuxième turbine (20), et l'agencement comportant de plus une machine dynamoélectrique rotative (4), l'entrée de la deuxième turbine pouvant être raccordée dans l'agencement de façon à ce qu'elle soit entraînée par les gaz d'échappement venant de l'échappement du moteur, caractérisé par une chambre de combustion auxiliaire (7) qui peut être raccordée à l'intérieur de l'agencement de façon à générer des gaz pour entraîner la première ou la deuxième turbine, que le moteur (40) fonctionne ou non, la machine (4) étant agencée pour être couplée au turbocompresseur ou à la deuxième turbine, et la deuxième turbine étant agencée de façon à être susceptible d'être déconnectée de l'alimentation en gaz d'échappement du moteur.

2. Agencement de moteur à combustion interne selon la revendication 1, dans lequel la machine dynamoélectrique (4) peut fonctionner en générateur et la première turbine (2) ou la deuxième turbine (20) est raccordée à elle par l'intermédiaire d'un embrayage (5).

3. Agencement de moteur à combustion interne selon la revendication 1 ou la revendication 2, dans lequel la deuxième turbine (20) est agencée pour fonctionner dans un mode de turbine libre.

4. Agencement de moteur à combustion interne selon la revendication 3, dans lequel un conduit de sortie (21) de la deuxième turbine (20) est thermiquement couplé à un échangeur de chaleur qui est agencé pour extraire de la chaleur de ses gaz d'échappement.

5. Agencement de moteur à combustion interne selon l'une quelconque des revendications précédentes, dans lequel la machine dynamoélectrique (4) est une machine à grande vitesse et faible inertie agencée pour être entraînée par le turbocompresseur (T1) à la même vitesse de rotation que le turbocompresseur.

6. Agencement de moteur à combustion interne selon l'une quelconque des revendications précédentes, dans lequel ladite machine dynamoélectrique (4) est une machine à courant alternatif et comporte des moyens de commutation à semiconducteurs commandés par la gâchette pour commander son générateur.

7. Agencement de moteur à combustion interne selon l'une quelconque des revendications précédentes, dans lequel un jeu de turbines supplémentaire (T3) est inclus dans le circuit du turbocompresseur et/ou de la chambre de combustion auxiliaire (7).

8. Agencement de moteur à combustion interne selon la revendication 7, dans lequel une sortie (28) du circuit du jeu de turbines supplémentaire (T3) est agencée pour délivrer de l'air sous pression au côté d'entrée du turbocompresseur (T1).

9. Agencement de moteur à combustion interne selon l'une quelconque des revendications précédentes, dans lequel ladite autre turbine (2) est incorporée dans un autre jeu de turbines (T2) comprenant un autre compresseur (30), le circuit de l'autre jeu de turbines comportant une sortie qui est raccordée à l'entrée d'un jeu de turbines supplémentaire (T3) et/ou est raccordée à l'échappement du moteur à combustion interne.

10. Agencement de moteur à combustion interne selon la revendication 9, dans lequel des moyens formant vanne (12d, 25) sont présents pour contrôler les écoulements de gaz relatifs à partir de la sortie du circuit dudit autre jeu de turbines (T2) vers les entrées du turbocompresseur (T1) et du jeu de turbines supplémentaire (T2).

11. Agencement de moteur à combustion interne selon la revendication 9 ou la revendication 10, dans lequel l'autre jeu de turbines (T2) est présent, une sortie du circuit de l'autre jeu de turbines et un échappement dudit turbocompresseur (T1) étant raccordés à une entrée (13) du jeu de turbines supplémentaire (T3).

12. Agencement de moteur à combustion interne selon la revendication 11, dans lequel une vanne (25) est raccordée entre la sortie du circuit de l'autre jeu de turbines (T2) et l'entrée du jeu de turbines supplémentaire (T3).
